Europäisches Patentamt

European Patent Office

Office européen des brevets

(11) Veröffentlichungsnummer : **0 094 583**
**B1**

(12) EUROPÄISCHE PATENTSCHRIFT

(45) Veröffentlichungstag der Patentschrift :
28.08.85

(21) Anmeldenummer : 83104532.3

(22) Anmeldetag : 09.05.83

(51) Int. Cl.⁴ : **A 01 C 7/12, B 65 G 53/46,**
**A 01 C 15/04**

(54) Dosiergerät für Verteilersysteme für körnige Stoffe, wie Saatgut oder Dünger.

(30) Priorität : 14.05.82 DE 3218196

(43) Veröffentlichungstag der Anmeldung :
23.11.83 Patentblatt 83/47

(45) Bekanntmachung des Hinweises auf die Patenterteilung : 28.08.85 Patentblatt 85/35

(84) Benannte Vertragsstaaten :
DE FR GB NL SE

(56) Entgegenhaltungen :
EP-A- 0 037 783
DE-A- 1 946 213
DE-A- 2 352 010
FR-A- 2 458 985
US-A- 1 917 085
US-A- 2 593 516

(73) Patentinhaber : ACCORD Landmaschinen Heinrich
Weiste & Co. GmbH
Coesterweg 42
D-4770 Soest (DE)

(72) Erfinder : Weiste, Helmut, Dipl.-Ing.
Auf der Breite 22
D-4772 Bad Sassendorf (DE)

(74) Vertreter : Habbel, Hans-Georg, Dipl.-Ing.
Postfach 3429 Am Kanonengraben 11
D-4400 Münster (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung bezieht sich auf ein Dosiergerät für Verteilersysteme bei Vorrichtungen zum Verteilen von körnigem Gut, wie Saatgut oder Dünger, gemäß dem Oberbegriff des Hauptanspruches.

Eine gattungsgemäße Einrichtung wird in der DE-A-19 46 213 beschrieben. Bei diesen bekannten Dosiergeräten sind zur Vermeidung von Körnerbruch flexible Dichtlippen am Ausgang in Drehrichtung angeordnet. Hier erfolgt eine zwangsweise exakte volumenmäßige Dosierung des abzugebenden Gutes. Durch den Abstand zwischen den Außenkanten der Zellenwandungen des Zellenschubdosierrades und den eigentlichen starren Gehäusewandungen ergeben sich aber komplizierte Gehäuseformen, bei denen entsprechende Dichtleisten und den Stirnflächen des Zellenschubdosierrades und parallel zur Achse desselben angeordnet werden müssen. Die Zellenräder brw. das Zellenrad läßt sich zu Reinigungszwecken oder zu Reparaturzwecken nur schwierig aus der Gesamteinrichtung herauslösen.

Bei den bekannten Einrichtungen kann weiterhin leicht ein Zusetzen der einzelnen Zellen erfolgen, z. B. dann, wenn durch die Dosiervorrichtung hygroskopischer Dünger ausgetragen werden soll. Durch das Zusetzen der Zellen ergeben sich unterschiedliche Dosiermengen, die nicht kontrollierbar sind. Um zu einer einwandfreien Dosierung zu kommen, müßte daher stets der Sauberkeitsgrad des Zellenschubdosierrades kontrolliert werden.

Der Erfindung liegt die Aufgabe zugrunde, ein Dosiergerät zu schaffen, das mit einem einfach aufgebauten Zellenschubdosierrad ausgebildet ist, das Körnerquetschungen vermeidet und sich ansetzende hygroskopische Stoffe selbsttätig und automatisch lockert und wieder abgibt, wobei das Dosiergerät weiterhin so aufgebaut sein soll, daß leicht Reinigungs- und Auswechselarbeiten durchgeführt werden können und gleichzeitig je nach Anwendungsfall unterschiedliche Dosierräder eingesetzt werden können.

Diese der Erfindung zugrundeliegende Aufgabe wird durch die im kennzeichnenden Teil des Hauptanspruches genannten Merkmale gelöst.

Aus der GB-A-11 44 630 ist eine Zuführeinrichtung für transportable Streuer für pulverförmiges Material bekannt geworden, bei welcher innerhalb eines Vorratsbehälters ein Zuführrad angeordnet ist, das über Flügel an seinem Umfang Zellen schafft, wobei die Flügel an einem nachgiebigen, aus Gummi oder Kunststoff bestehenden Haltering angeordnet sind. Hierdurch wird eine Nachgiebigkeit der die Zellenwände bildenden Flügel erreicht, durch die ein Zusetzen der Zellenräume und Brückenbildungen innerhalb der Zellen ausgeschaltet werden soll. Die Austragsöffnung des Vorratsbehälters, die von dem Zuführrad überdeckt wird, weist eine Größe auf, die der Öffnungsweite einer Zelle entspricht. Hierdurch ist nicht sichergestellt, daß der in den einzelnen Zellen aufgenommene Materialanteil auch tatsächlich beim Umlauf des Zellenrades in vollem Umfang durch die Austragsöffnung abgegeben wird. Die bekannte Einrichtung weist weiterhin im Bereich der Austragsöffnung des Vorratshälters einen gegen die Rückstellkraft einer Feder elastisch beweglichen Wandungsabschnitt auf, der dann nachgeben soll, wenn beispielsweise Steine od. dgl. in den Bereich der Austragsöffnung kommen. Die bekannte Vorrichtung ist daher nicht geeignet, als Dosiergerät zum Austragen von Dünger oder Saatgut zu dienen, da die Dosierung nicht die gewünschte Genauigkeit sicherstellt, sondern die bekannte Einrichtung dient beispielsweise als Salzstreuer für Straßen od. dgl.

Demgegenüber wird durch die erfindungsgemäße Lehre ein Dosiergerät geschaffen, bei dem eine sorgfältige und genaue Dosierung des zu verteilenden Gutes möglich ist, was insbesondere bei Saatgut notwendig ist, da von der genauen Dosierung des über die Verteiler dem Erdboden zugeführten Saatgutes die optimale Hektarleistung des zu erntenden Gutes bestimmt wird und beim Ausbringen von Dünger ein Über- oder Unterdüngen vermieden wird, was ebenfalls auf die Hektarleistung entscheidenden Einfluß hat.

Vorzugsweise sind die Flügel des Dosierrades nicht radial angeordnet, sondern in Drehrichtung gesehen etwas nach rückwärts nacheilend, wodurch sich die äußere Kante des Flügels, wenn sie ausweicht, von der Dichtwandung der das Zellenschubdosierrad umgebenden Schale wegbewegt, so daß sich schnell ein ausreichender Spalt bildet. Das trägt zudem dazu bei, daß weniger Reibung zwischen den Zellenflügeln und der Dichtschale auftritt. Die flexiblen Zellenflügel ergeben einen weiteren Vorteil bei der Dosierung von Dünger, der hygroskopisch ist. Durch die dauernde Bewegung und Biegung der Oberfläche reinigen sich die Zellen des Zellenschubdosierrades leichter selbst und es kann kein Dünger anhaften und die Zellen zukleben.

Eine noch bessere Selbstreinigung wird vorzugsweise dadurch erreicht, daß auch der Zellengrund flexibel ausgeschaltet ist. Es können dadurch nicht nur die Flügel, sondern auch der Zellengrund einfedern und walken.

Weiterhin wird dadurch, daß der Boden des Vorratsbehälters aus einer Mulde oder Schale gebildet ist, die nach oben eine zylindrische Ausprägung hat, der Nachteil der bekannten Konstruktionen, die kompliziert ausgebildet waren, vermieden. Ein gewisser Sektor dieser Schale ist im zylindrischen Teil auf der Breite des Zellenschubdosierrades als Öffnung ausgespart. Auf diese Weise kann das Zellenschubdosierrad einfach axial durchgeschoben werden oder auch von unten her eingeklappt werden. Zusätzlich können federnde oder flexible Dichtbleche oder -lippen angebracht werden.

Wenn die Zellenschubdosierräder nicht durch ein drehzahlveränderndes Getriebe angetrieben werden, kann die Zellenradweite und damit die Dosiermenge durch Einschieben von Füllstücken erreicht werden, wobei zur Verhinderung von unnötiger Reibung die Füllstücke nach oben zum Tank hin mit einem Schieber abdeckbar sind, dessen Schließkante synchron mit den Füllstücken verschoben wird.

Bei mehreren Förderleitungen, die mit einzelnen Zellenschubdosierrädern beschickt werden sollen, können die Zellenschubdosierräder sehr einfach auf einer Achse unter dem durchgehenden entsprechend profilierten Boden des Behälters angeordnet werden. Wenn ein sehr großer Dosiermengenbereich gefördert werden muß, kann das Übersetzungsverhältnis, z. B. der Variationsbereich des Getriebes, erheblich kleiner sein, wenn z. B. zwei Zellenräder unterschiedlichen Zellenvolumens jeweils nebeneinander angeordnet sind. Für kleine Mengen kann dann die Welle mit den nebeneinander gesteckten Zellenschubdosierrädern um eine kleine Zellenradbreite verschoben werden, so daß dann ein Zellenschubdosierrad für kleine Dosiermengen über den jeweiligen Öffnungen zu liegen kommt.

Bei Sämaschinen oder Düngerstreuern mit mehreren Förderleitungen wird häufig verlangt, einzelne Leitungen nicht zu beschicken oder nur noch mit einem Teil der Breite des Düngerstreuers oder der Sämaschine zu arbeiten. Dazu wird vorgeschlagen, mit zylinderförmif gebogenen Schiebern, die neben den Öffnungen in der Bodenschale des Behälters angeordnet sind, die öffnungen über den Zellenschubdosierrädern zu schließen. Die Schieber können dabei entwader axial verschoben werden oder tangential um den Zylindermantal gedreht werden.

Ein weiterer Vorteil der erfindungsgemäßen Konstruktion ist darin zu sehen, daß die komplette Gruppe von Zellenschubdosierrädern mit der Welle unter der Schale axial herausziehbar ist und so gesäubert werden kann.

Auch besteht die Möglichkeit, die Welle mit den Zellenschubdosierrädern nach unten hin wegzuklappen.

Schließleich kann vorgesehen sein, daß die Gesamteinheit der Zellenschubdosierräder komplett mit der entsprechend profilierten Bodenschale in Führungsschienen unter den Vorratsbehälter eingeschoben werden kann.

Ausführungsbeispiele der Erfindung werden nachfolgend anhand der Zeichnungen erläutert.

Die Zeichnungen zeigen dabei in

Figur 1 eine erste Ausführungsform gemäß der Erfindung, in

Figur 2 eine abgeänderte Ausführungsform der Erfindung und in

Figur 3 eine Draufsicht auf eine Anordnung eines Vorratstanks mit drei Förderleitungen.

In den Zeichnungen ist mit 1 allgemein ein Vorratstank bezeichnet, dessen Bodenseite als Halbschale nach innen gewölbt ist. Unter dem Tank verlaufen Förderleitungen 2, die das aus dem Tank geförderte Gut entsprechenden Verteilern od. dgl. zuführen.

In der nach innen gewölbten Bodenschale ist im Bereich der förderleitung 2 die Schale ausgenommen, so daß eine Öffnung geschaffen wird, in der ein Zellenschubdosierrad 3 angeordnet ist, das fest auf einer Welle 4 gelagert ist, die von einer nicht dargestellten Vorrichtung umlaufend angetrieben wird.

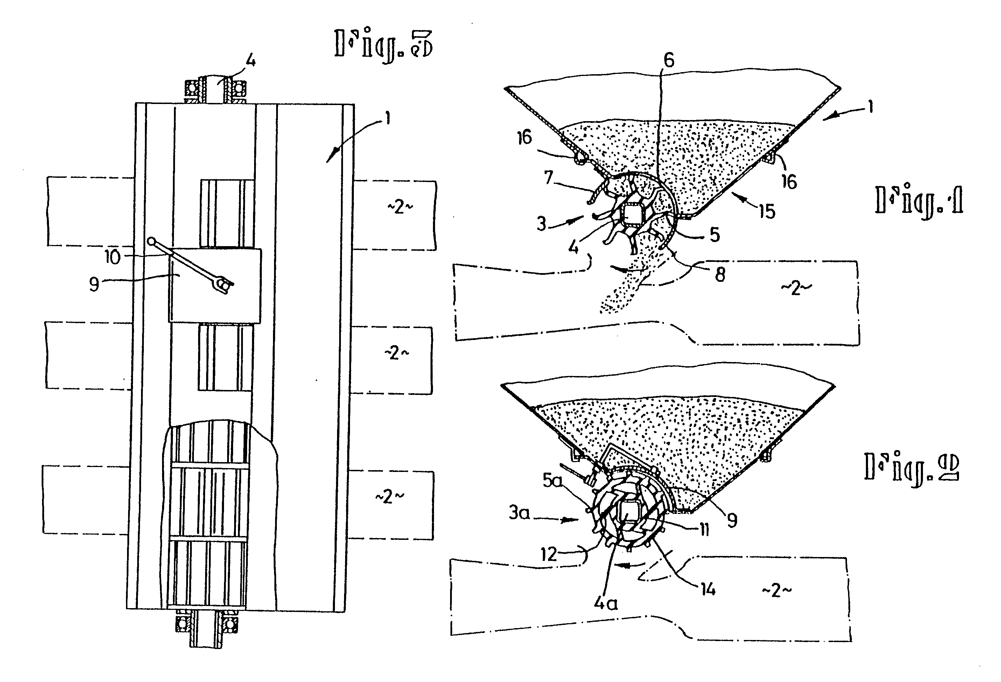

Wie aus der Zeichnung ersichtlich, besteht das Zellenschubdosierrad 3 aus einem flexiblen Werkstoff und weist Zellenwände auf, die in Drehrichtung des Zellenschubdosierrades gesehen gegenüber dem Radialstrahl nach rückwärts geneigt sind, wobei die Zellenwände mit 5 bezeichnet sind. Am äußeren Endteil jeder Zellenwandung 5 sind bei der Ausführungsform gemäß Fig. 1 in Drehrichtung des Zellenschubdosierrades gesehen nach vorne abgewinkelte Endteile 6 angeordnet. Im Bereich der Auslauföffnung des Vorratstankes 1, in der das Zellenschubdosierrad 3 angeordnet ist, sind das Zellenschubdosierrad 3 teilweise ummantelnde Abdichtflansche 7 und 8 angeordnet, die beispielsweise auch aus flexiblem Werkstoff bestehen können oder federnd gestaltet sein können.

Im Bereich der Auslauföffnungen sind Verschlußschieber 9 vorgesehen, die beispielsweise über einen Handhebel 10 betätigbar sind und die über die Auslauföffnung geschoben werden können, so daß entweder die Auslauföffnung ganz verschlossen ist oder ein teilweiser Abschluß der Auslauföffnung möglich wird.

Bei der Ausführungsform in Fig. 2 ist das eigentliche Zellenschubdosierrad 3a ebenfalls auf einer Antriebswelle 4a fest angeordnet und weist einen zylindrischen Befestigungskern 11 auf, an den sich Speichen 12 anschließen, die in Drehrichtung nach rückwärts geneigt sind und einen äußeren Zylinderteil 14 tragen, der mit den eigentlichen Zellenwänden 5a versehen ist. Die Zellen sind hier kleiner ausgebildet und die Zellenwände 5a verlaufen in Richtung des Radialstrahles. Bei dieser Ausführungsform kann das gesamte Zellenschubdosierrad 3a walken und nachgeben, so daß sich ansetzender beispielsweise hygroskopischer Dünger leicht wieder aus den Zellenräumen löst.

In der Zeichnung ist weiterhin erkennbar, daß das untere Teil des Vorratsbehälters als Baueinheit 15 ausgebildet ist, die in entsprechende Halterungsflansche 16 eingeschoben werden kann, so daß damit die Gesamteinheit herausgelöst und beispielsweise Reinigungs- und Reparaturzwecken zugeführt werden kann.

In gleicher Weise ist es natürlich möglich, die Gesamteinheit auch abzuklappen.

Aus der Darstellung in fig. 2 ist erkennbar, wie der Schieber 9 die Auslauföffnung des Vorratsbehälters 1 abschließt, während in der Darstellung gemäß Fig. 1 die Auslauföffnung offen dargestellt ist.

**Patentansprüche**

1. Dosiergerät für Verteilersysteme bei Vorrichtungen zum Verteilen von körnigem Gut, wie Saatgut oder Dünger, mit einem an einen Vorratsbehälter anschließenden Zellenschubdosierrad (3), durch das das Gut über Förderleitungen (2) dem oder den eigentlichen Verteilern aufgegeben **wird, wobei die Bodenseite des Vorratsbehälters** als eine durch das Zellenschybdosierrad (3) und über am Umfang des Rades wirksame elastische Dichtungen verschlossene Austrittsöffnung ausgebildet ist und die zu den Förderleitungen hin offene Abgabeseite des Zellenschubdosierrades eine Länge aufweist, die der Umfangslänge mehrerer aufweist, die der Umfangslänge mehrerer Zellenräume entspricht, dadurch gekennzeichnet, daß der Vorratsbehälter (1) in seinem unteren Bereich nach innen teilkreisförmig mit einem Radius eingewölbt ist, der dem Radius des Zellenschubdosierrades (3, 3a) entspricht und in diesem Bereich seine Austrittsöffnung aufweist, wobei das Zellenschubdosierrad (3, 3a) wenigstens im äußeren Bereich der Zellenwände (5, 5a) in für sich bekannter weise flexibel ausgebildet ist.

2. Dosiergerät nach Anspruch 1, dadurch gekennzeichnet, daß die Zellenwände (5) des Zellenschubdosierrades (3) gegenüber dem Radialstrahl in Drehrichtung gesehen nach rückwärts geneigt sind.

3. Dosiergerät nach Anspruch 2, dadurch gekennzeichnet, daß die äußeren Endteile (6) der Zellenwandungen des Zellenschubdosierrades (3) in Drehrichtung des Zellenschubdosierrades (3) gesehen nach vorne abgewinkelt sind.

4. Dosiergerät zumindest nach Anspruch 1, dadurch gekennzeichnet, daß die Zellenwandungen (5a) des Zellenschubdosierrades (3a) in richtung des radialstrahles geradlinig ausgebildet sind.

5. Dosiergerät zumindest nach Anspruch 1, dadurch gekennzeichnet, daß das Zellenschubdosierrad (3a) aus flexiblem Werkstoff besteht und als Speichenkörper ausgebildet ist mit einem zentralen Antriebsteil (11), sich daran nach außen hin anschließenden, gegenüber dem Radialstrahl in Förderrichtung rückwärts geneigten Speichen (12) und einem äußeren Zylinderteil (14), auf dem nach außen gerichtet, gegenüber dem Radialstrahl geradlinig ausgerichtete Zellenwände (5a) angeordnet sind.

6. Dosiergerät zumindest nach Anspruch 1, dadurch gekennzeichnet, daß an der Außenseite des Vorratsbehälters (1) im Bereich der Zellenschubdosierräder (3, 3a) und der Austragsöffnung das Zellenschubdosierrad teilweise ummantelnde Abdichtflansche (7, 8) angeordnet sind.

7. Dosiergerät nach Anspruch 6, dadurch gekennzeichnet, daß die Abdichtflansche (7, 8) federnd bzw. flexibel ausgebildet sind.

8. Dosiergerät nach Anspruch 1 mit mehreren Förderleitungen, dadurch gekennzeichnet, daß mehrere Zellenschubdosierräder nebeneinander den Förderleitungen zugeordnet auf einer gemeinsamen Welle angeordnet sind.

9. Dosiergerät nach einem oder mehreren der vorhergehenden Ansprüche, dadurch gekennzeichnet, daß unterschiedlich ausgebildete Zellenschubdosierräder auf einer gemeinsamen Welle angeordnet sind.

10. Dosiergerät nach einem oder mehreren der vorhergehenden Ansprüche, gekennzeichnet durch von außen betätigbare Schieber (9) zum Versperren einzelner Auslauföffnungen im Bereich der Zellenschubdosierräder.

11. Dosiergerät nach einem oder mehreren der vorhergehenden Ansprüche, dadurch gekennzeichnet, daß der untere Bereich des Vorratsbehälters und das Zellenschubdosierrad als eire Dosiereinheit ausgebildet sind, wobei die Dosiereinheit über Führungsschienen unterhalb des Vorratsbehälters (1) einschiebbar ist.

12. Dosiergerät nach einem oder mehreren der vorhergehenden Ansprüche, dadurch gekennzeichnet, daß die die Zellenschubdosierräder tragende Welle (4) zusammen mit den Zellenrädern ausziehbar ausgebildet ist.

13. Dosiergerät nach einem oder mehreren der vorhergehenden Ansprüche, gekennzeichnet durch an sich bekannte Füllstücke zum Einsatz in die Zellen des oder der Zellenschubdosierräder, die von außen betätigbar in die Zellen einschiebbar sind.

## Claims

1. Feed control for distributing systems in apparatus for the distribution of granular material such as seed or fertiliser, with a compartmented push-action feed control wheel (3) connected to the output side of a storage container and feeding the material through conveying conduits (2) to the distributor or distributors proper, and the bottom of the storage container is constructed as an outlet aperture closed by the compartmented push-action feed control wheel (3) and by means of elastic sealing elements effective on the circumference of the wheel, and the duscharge side of the compartmented push-action feed control wheel which is open towards the conveying conduits is of a length which corresponds to the circumference length of a plurality of compartments, characterised in that the storage container (1) in its lower region is curved inwardly along part of a circle with a radius which corresponds to the radius of the compartmented push-action feed control wheel (3, 3a) and in this region is provided with its outlet aperture, and the compartmented push-action feed control wheel (3, 3a) is of flexible construction in a manner known per se at least in the outer region of the compartment walls (5, 5a).

2. Feed control according to claim 1, characterised in that the compartment walls (5) of the compartmented push-action feed control wheel (3) are inclined rearwardly relatively to a radial line as viewed in the direction of rotation.

3. Feed control according to claim 2, characterised in that the outer end portions (6) of the compartment walls of the compartmented push-action feed control wheel (3) are bentover forwardly as considered in the direction of rotation of the compartmented push-action feed control wheel (3).

4. Feed control at least according to claim 1, characterised in that the compartment walls (5a) of the compartmented push-action feed control wheel (3a) constructed to be straight along a straight radial line.

5. Feed control at least according to claim 1, characterised in that the compartmented push-action feed control wheel (3a) is made of flexible material and is of spoked construction with a central drive part (11), spokes (12) which are next in the outward direction ans which are inclined rearwardly in the conveying direction relatively to a straight radial line, and an outer cylindrical part (14) on which there are arranged outwardly directed compartment walls (5a) which are arranged straight along straight radial lines.

6. Feed control at least according to claim 1, characterised in that at the outside of the storage container (1) sealing flanges (7, 8) partly enveloping the compartmented push-action feed control wheel are arranged in the region of the compartmented push-action feed control wheels (3, 3a) and of the discharge aperture.

7. Feed control according to claim 6, characterised in that the sealing flanges (7, 8) are of elastic or flexible construction.

8. Feed control according to claim 1, with a plurality of conveyning conduit, characterised in that plurality of compartmented push-action feed control wheels are arranged adjacent one another on a common shaft, associated with the conveying conduits.

9. Feed control according to one or more of the preceding claims, characterised in that differently constructed compartmented push-action feed control wheels are arranged on a common shaft.

10. Feed control according to one or more of the preceding claims, characterised by slides (9) operatable from the exterior for closing individual outlet apertures in the region of the compartmented push-action feed control wheels.

11. Feed control according to one or more of the preceding claims, characterised in that the compartmented push-action feed control wheel and the lower region of the storage container are constructed as a feed control unit, and the feed control unit is adapted to be introduced under the storage container (1) by means of guide rails.

12. Feed control according to one or more of the preceding claims, characterised in that the shaft (4) carrying the compartmented push-action feed control wheels is constructed to be withdrawable together with the compartmented wheels.

13. Feed control according to one or more of the preceding claims, characterised by per se known filler elements for insertion in the compartments of the compartmented push-action feed control wheel or wheels, introduction into the compartments being controlled from the exterior.

## Revendications

1. Dispositif doseur pour épandeur équipant des appareils destinés à épandre des matières granuleuses, telles que graines ou engrais, comprenant une roue doseuse à alvéoles (3) montée sur une trémie d'alimentation, au moyen de laquelle la matière est dirigée vers le ou les épandeurs proprement dits par des conduites d'alimentation (2), le fond de ladite trémie se présentant sous la forme d'un orifice de sortie fermé par ladite roue doseuse à alvéoles (3) et par des garnitures élastiques placées sur le pourtour de ladite roue, et la longueur du côté de décharge de ladite roue doseuse, ouvert en direction desdites conduites d'alimentation, correspondant à la longueur circonférentielle de plusieurs cavités alvéolaires, caractérisé en ce que, dans sa partie inférieure, la trémie d'alimentation (1) est cintrée vers l'intérieur sous la forme d'un cercle partiel possédant un rayon correspondant à celui de la roue doseuse à alvéoles (3, 3a), et en ce que ladite trémie d'alimentation (1) possède dans cette partie un orifice de décharge, la roue doseuse à alvéoles (3, 3a) étant de conception élastique selon une manière connue en soi au moins dans la partie externe de la paroi des alvéoles (5, 5a).

2. Dispositif doseur conforme à la revendication 1, caractérisé en ce que la paroi des alvéoles (5) de la roue doseuse à alvéoles (3) est inclinée vers l'arrière dans le sens opposé au rayon radial lorsque l'on considère l'ensemble selon le sens de rotation.

3. Dispositif doseur conforme à la revendication 2, caractérisé en ce que les parties terminales externes (6) des parois des alvéoles de la roue doseuse à alvéoles (3) sont inclinées dans le sens de rotation de ladite roue (3) lorsqu'on les regarde par l'avant.

4. Dispositif doseur conforme au moins à la revendication 1, caractérisé en ce que les parois des alvéoles (5a) de la roue doseuse à alvéoles (3a) sont droites et placées dans le sens du rayon radial.

5. Dispositif doseur conforme au moins à la revendication 1, caractérisé en ce que la roue doseuse à alvéoles (3a) est exécutée dans un matériau souple, en ce qu'elle est munie de rayons, et en ce qu'elle comprend un élément d'entraînement central (11), des rayons (12) reliés vers l'extérieur à ladite roue et inclinés vers l'arrière dans le sens de l'alimentation en opposition au rayon radial et un élément cylindrique externe (14) sur lequel sont disposées des parois d'alvéoles rectilignes (5a) dirigées vers l'extérieur et opposées au rayon radial.

6. Dispositif doseur conforme au moins à la revendication 1, caractérisé en ce que, sur la partie externe de la trémie d'alimentation (1) au niveau des roues doseuses à alvéoles (3, 3a) et de l'orifice de décharge de ladite roue doseuse sont prévus des déflecteurs (7, 8) enveloppant partiellement ladite roue.

7. Dispositif doseur conforme à la revendication 6, caractérisé en ce que les déflecteurs (7, 8) sont élastiques ou de conception souple.

8. Dispositif doseur conforme à la revendication 1, comportant plusieurs conduites d'alimentation, caractérisé en ce que plusieurs roues doseuses à alvéoles disposées côte-à-côte et correspondant aux différentes conduites d'alimentation sont placées sur un même arbre.

9. Dispositif doseur conforme à une ou plusieurs des revendications précédentes, caractérisé en ce que des roues doseuses à alvéoles de conception différente sont placées sur un même arbre.

10. Dispositif doseur conforme à une ou plusieurs des revendications précédentes, caractérisé en ce que des registres (9) manœuvrables depuis l'extérieur sont prévus pour fermer les divers orifices de décharge au niveau des roues doseuses à alvéoles.

11. Dispositif doseur conforme à une ou plusieurs des revendications précédentes, caractérisé en ce que la partie inférieure de la trémie d'alimentation et la roue doseuse à alvéoles constituent une unité de dosage, ladite unité pouvant être introduite sur des glissières prévues sous la trémie (1).

12. Dispositif doseur conforme à une ou plusieurs des revendications précédentes, caractérisé en ce que l'arbre (4) supportant les roues doseuses à alvéoles est prévu pour être déposé en même temps que lesdites roues à alvéoles.

13. Dispositif doseur conforme à une ou plusieurs des revendications précédentes, caractérisé en ce que des organes de remplissage connus en soi sont prévus pour être placés dans les alvéoles de la ou des roues doseuses à alvéoles, et en ce que lesdits organes peuvent être introduits dans lesdits alvéoles grâce à une commande extérieure.

Fig. 3

Fig. 1

Fig. 2

0 094 583